# EUROPEAN PATENT APPLICATION

(11) **EP 1 927 417 A1**
(43) Date of publication of application: **04.06.2008**
(21) Application number: 07004631.3
(22) Date of filing: 07.03.2007
(51) Int. Cl.: B23B 29/034, B23B 43/00, B23D 9/00, B23Q 9/00

(54) **Portable boring and facing machine with fixed axes, single motorization and continuous tool feeding**

(30) Priority: 28.11.2006 IT GE20060116
(71) Applicant: de Angelis, Giuseppe, 16142 Genova (IT)
(72) Inventor: de Angelis, Giuseppe, 16142 Genova (IT)

(57) **Abstract**

Portable instrument for borinq, facing and conical works, with fixed axes anchored to the working piece by a self centering expansion system or with x-y-z regulation system.

The machine is composed of three parts: fixed, sliding and rotating. The sliding parts is telescopically united with the fixed one and it slides on it through a lead screw-lead nut system allowing the boring work. This part also include the support of the motor and the kinematic chain for both movements.

The rotating part, fixed on the sliding one, permit the facing work, thanks to a tool holder slide that moves radially and on which is fixed the cutting tool.

The combination of both movement permit the achievement of the conical work.

## Description

### Detailed description

This invented machine is a modern, compact, multipurpose instrument, which provides you with a solution for the facing, boring and conical work for on-site jobs, equipped with a single motorization and characterized by central fixed axes having an easy and accurate placement in the seat of the working piece.

This instrument is applicable in several jobs and it is ideal for geometrical reset of valve seat flanges and for big mechanical coupling fittings like fly wheel, shafts and cylinder in thermal power plant, turbogas, oil refinery, shipyard, chemical factories, paper mills and iron metallurgy. It can also be used to achieve an accurate chamfering for high thickness nuclear power plants pipes with high pressure and temperature.

The maneuverability of this machine, makes it also affordable for traditional work shop and for high accurate mechanical production lines.

In the already existed traditional machines of boring and facing on-site jobs with fixed axes, the work is done with different types of machines where each movement is done separately.

In these machines the motorization drags the tool while the axial advancement is done manually or by another motorization and no radial movement exists, or it is discontinuous or difficult to achieve.

Usually, a preshaped cutting tool is used, which exert a great cutting power during rotation causing the detriment of the finishing accuracy of the work.

The main character of this newly invented machine is the possibility to perform the rotation and the automatic advancement in boring and facing work with only one motorization.

The machine could be constructed in adequate dimension and form, according to the working surface, which is working out the problem of boring and facing with fixed axes and cantilevered tool to the working piece, in on site job which until now have been done with an outstanding loss of time and resources.

The technical features of the present invention, in reference to what is already mentioned, are more clearly described in the claims, and its advantage are listed in the following description, with reference to the accompanying drawings which illustrates an embodiment of the invention without limiting the scope of its application and in which:

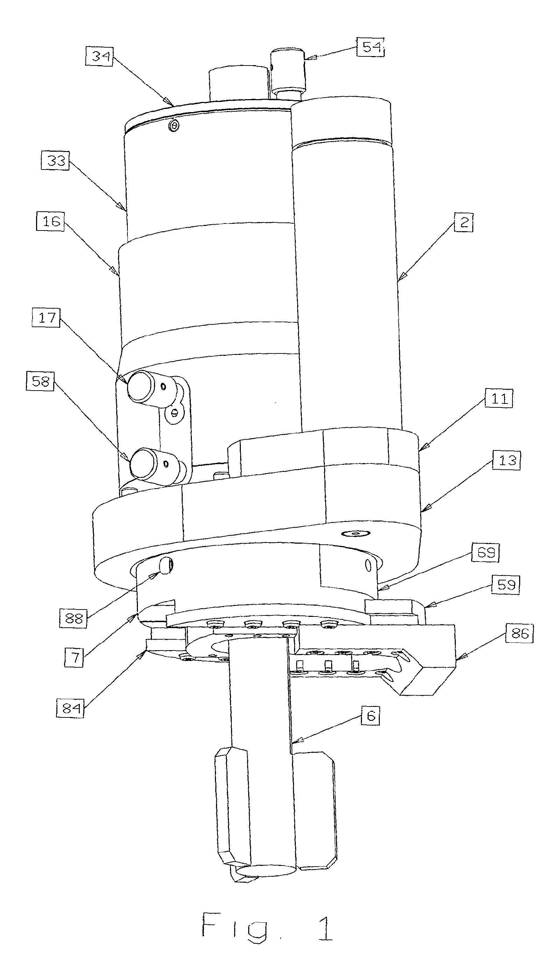

- FIG.1 - External view of the machine completely mounted
- FIG.2 - Top of machine exploded view, where are visible the kinematic chain for the axial advancement in boring work and the rapid positioning of the machine.
- FIG.3 - Exploded view of the inferior kinematic chains for advancement movement of the tool in facing work including the motorization and the fixed axes of the machine.
- FIG.4 - Detailed view of the common kinematic chain for both movements and the clutch for radial advancements of the tool.
- FIG.5 - Exploded view of the external sliding carter of the machine
- FIG.6 - Exploded view of the internal fixed carter, anchored to the machine axes.

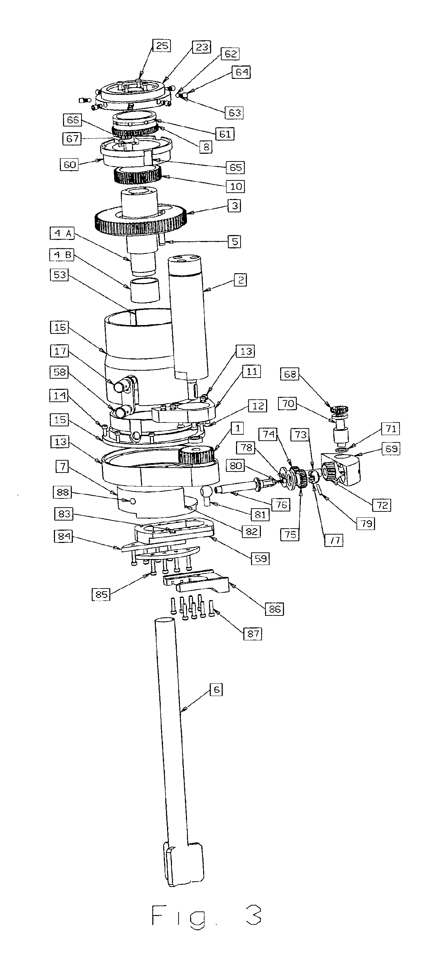

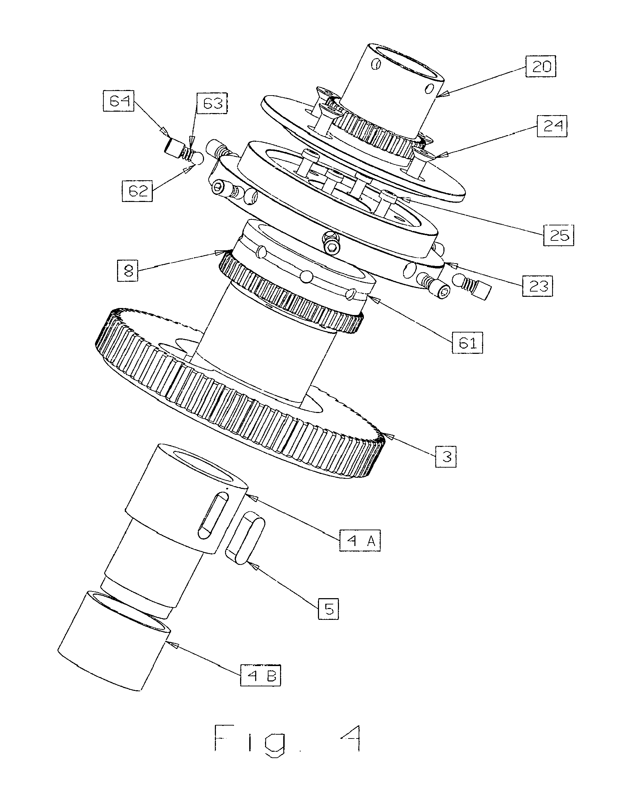

In reference to FIG. 3-4 the machine is composed of a basic kinematic chain that is connected as needed to another kinematics for boring or facing work.

Operating the motive pinion (1) attached to shaft of the motor (2), causing the rotation of the gear (3) on the bush (4A-B) which is keyed through the key (5) to the machine axes (6).

In the gear (3), connected to the main body of the operating head (7), are fitting the differential motorized gears for boring (8) and the differential motorized gears for facing (10), which in the boring phase rotate with the same speed.

The motor (2) is anchored to the support (11) through screw (12)and bolted to the protection carter (13) which by its turn is attached to the collar (15) through screws (14) and to the bell (16) on which are anchored ratchets gears (17) and (58).

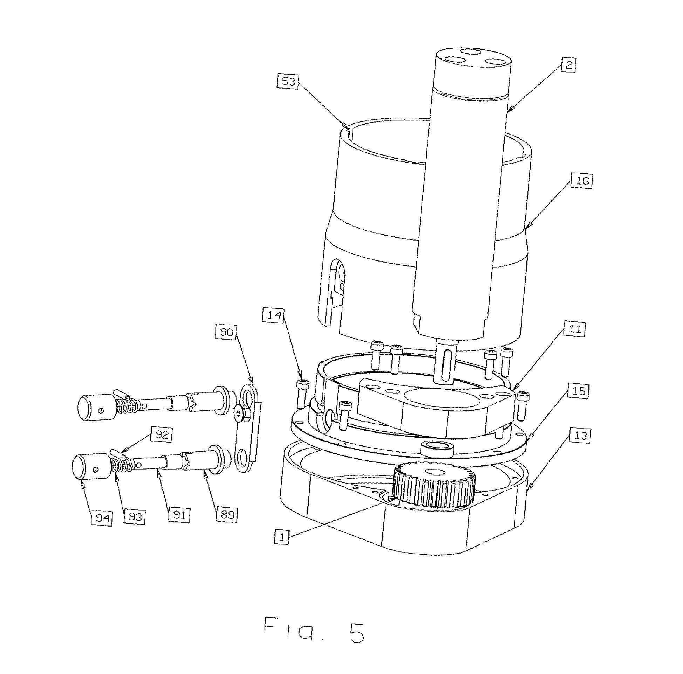

In reference to FIG. 5 the ratchets gears of the machine are constituted of support cylinder (89), anchored to the carter (16) through plaque (90). Inside this cylinder slide a piston (91) causing the contrast of the mechanism.

The ratchet gear has two position, insert and withdrawal, according to the pin (92), connected to the piston (91) and the knurled knob (94). The pin (92) could be positioned in two holes with two different levels which exist on the support cylinder (89). The contrast for the two position is realized through the spring (93).

The boring work is done inserting the ratchet gear (17) for the axial advancement movement of the operating head (7) figured in FIG. 3.

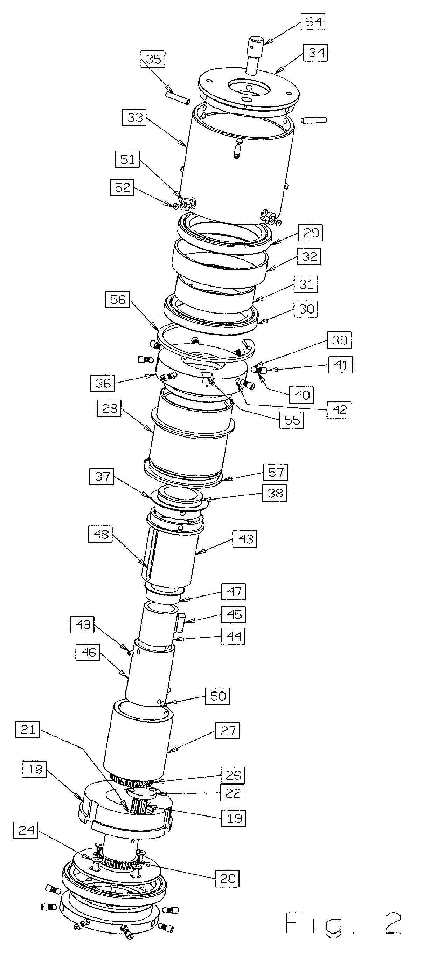

Referring to the FIG. 2-3 the ratchet gear (17) fits in one of the four recess existing on the differential spider (18), which is no longer free to rotate, force the satellite (19), placed in recess (21) and covered by the lid (22), to rotate on itself receiving the motion from the motive gear (20).

This gear (20) is by its turn bolted to the superior body (23) and to the gear (3) through screw (24) and (25) and transmits the motion to a driven gear (26) made with one tooth less than the drive gear (20), rotating with a lesser speed .

The driven gear (26) is integrated piece of the threaded body of the axial advancement (27) which is connected to the fitting lead nut (28) together constituting a lead-screw/lead-nut coupling system allowing the axial translation movement of the operating head (7) as will be described.

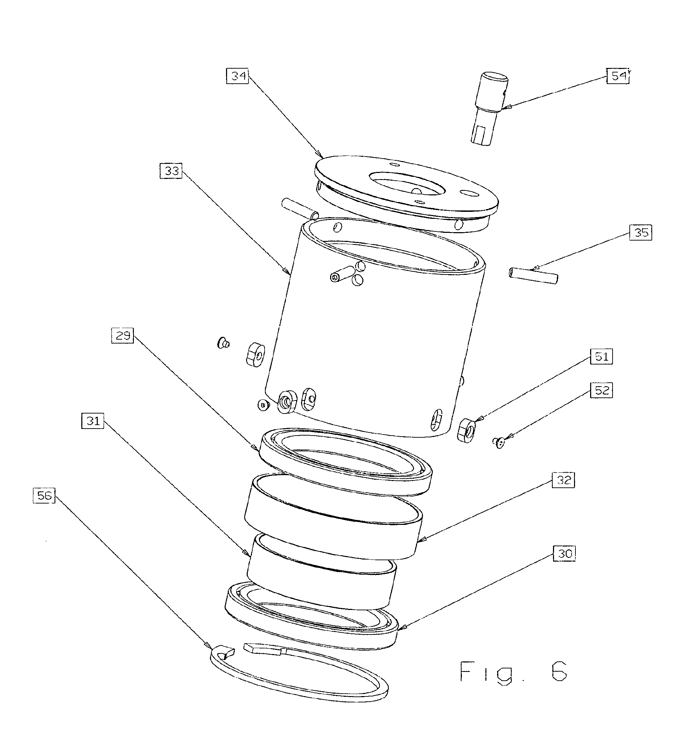

In reference to FIG. 2-6 the lead nut (28), is supported during rotation by bearings (29-30), with internal distance ring (31) and external distance ring (32), maintained with shoulder rings (56) and (57), which by their turn are integrated to the body (33) covered by lid (34) locked by key (35) to the machine axes (6) where it is needed.

In FIG.2 the lead nut (28) is connected to a clutch composed of an external body (36), internal body (37) having a track (38) in which slide spheres (39) kept in its position in the recess (42) through spring (40) and grain (41).

The internal body (37) is integrated with the tube (43) supported in rotation with the bush (44) keyed to the machine axes (6) through key (45) and from bushing (47). This tube is constructed with a longitudinal guide (48) in which slide a couple of guide pins (49) attached to the external tube (46). This assembly allows the reciprocal traverse of the two tubes (46) and (43) and at the same time it allows the transmission of the rotatory motion.

In FIG. 2-3 the external tube (46) is fixed through grains (50) to the drive gear (20) which receive the rotatory motion directly from the main body (3) through the superior body of the clutch (23).

The different rotation speeds between the threaded body (27) and the screw nut (28) produce a motion of unscrewing between them which cause the axial traverse of the operating head (7) respecting the fixed point anchored on the machine axes (6).

This traverse is guided in sliding between the fixed part (33), provided with keys (51) kept in place through screws (52) fixed externally on it, and the guides (53) internal to the bell (16).

When the boring stroke is done it is possible to do a quick feedback locking the lead nut (28); to produce this, after withdrawing the ratchet gear (17), is inserted another ratchet gear (54), in the cavity (55) of the external body (36).

Initiating the sliding of the emergency clutch system which allows to the threaded body (27) to screw down into the lead nut (28).

Referring to FIG.3, the facing work, is realized by inserting the ratchet gear (58) for the radial advancement of the slide (59).

The ratchet gear (58) is engaged in one of the four recess (65) on the differential spider (60) which receive the motion from the superior fixed body (23) through the clutch composed of the gear (8) track (61), spheres (62), kept in position with spring (63) and grain (64).

The spider (60), locked from rotation, force the satellite (66) to rotate around itself in the slot (67), transmitting the motion to the differential driven gear (10) which by having a less tooth than the drive gear (8), it turns with a lesser speed.

It's also evident that the emergency clutch is activated in case of crash or limit stop of the tool holder slide causing the spheres (62) to go out from the recess and slide into the track (61), causing the superior fixed body (23) to rotate freely and blocking the advancement of the tool holder slide.

Afterwards the motion is transferred to the driven gear head (68) fitting in the gearbox (69) attached to the main body (7) and anchored to the driven gear (3).

The worm screw (70) is dragged to rotate through the key (not represented) from the gear (68), supported by the washer (71), transmitting the motion to the helical gear (72) keyed to the shaft (73) on which rotate integrated the drive gear (74) connected to the driven gear (75) which rotate freely on the lead screw (76).

To make the gear (75) integrated to the lead screw (76) should be inserted the two position graft fixed-neutral (77),unscrewing the grain (78) causing advancement of the pin (79) compressing the spring (80) and dragging the graft (77) till connecting it to the gear (75).

On the lead screw (76) is installed a lead nut (81) with a pivot, which when dragged , is placed in a slot (82) in the main body (7). This pivot is inserted in the slot (83) of the shuttle (59) allowing its advancement through slide ways (84) and fixing screws (85).

On the shuttle (59) is anchored the toolholder (86), adjustable through screws (87).

For the manual positioning of the shuttle (59) by operating on the lead screw (76) it is possible to insert a wrench in the slot (82) through the hole (88) which exist on the external part of the main body (7).

This process is possible after unscrewing the grain (78) which through the spring (80), clear the gear (75), which will rotate freely on the lead screw (76), allowing the manual positioning of the machine.

## Claims

1. A machine for metalworking, for facing and boring operations of FIG.1, provided with a toolholder saddle which can be positioned radially in both the modality, motorized or manual **characterized by** a machine body entirely drilled which allows an anchorage around a fixed axes positioned in the working seat.

2. The machine as claimed in claim 1 **characterized by** the presence of one motorization with one common kinematic chain that subsequently divide to feed both boring and facing kinematic.

3. The machine as claimed in claim 2 **characterized by** the presence of two differential unit protected and loaded with a specific emergency clutch.

4. The machine as claimed in claim 3, provided with already mentioned differential unit **characterized by** their activation through the insertion of the appropriate ratchets gears(17 and 58, FIG.3) or other equivalent device which start the functioning.

5. The machine as claimed in claim 4 provided with a kinematic chain for the axial boring advancement **characterized by** a reciprocal unscrewing/screwing movement of two components (lead screw/lead nut) obtained through a differentiated motion between them.

6. A metalworking machine as claimed in claim 5 **characterized by** both continuous and reversible working movement due to the respective kinematic chain of advancement.

7. The machine as claimed in claim 5 equipped with the already mentioned kinematic chain of axial advancement **characterized by** the possibility to obtain a rapid positioning through a graft of a superior contrast (54), which by blocking the lead nut produce a rapid unscrewing of the sliding part.

8. The machine as claimed in claim 1 **characterized by** the possibility of a rapid positioning and blocking along the axes as needed.

9. The machine as claimed in claim 1 **characterized by** the presence of a facing head equipped with a sliding toolholder saddle, operated by the common kinematic chain ,claimed in claim 2 to produce a facing work (for a better comprehension of the facing head, please refer to Italian pat. n. GE2006A000086 of 10-08-06).
